Europäisches Patentamt

European Patent Office

Office européen des brevets

(19)

(11) Veröffentlichungsnummer: **0 123 970**
**A2**

(12) # EUROPÄISCHE PATENTANMELDUNG

(21) Anmeldenummer: **84103923.3**

(22) Anmeldetag: **09.04.84**

(51) Int. Cl.³: **G 05 D 23/19, A 47 J 27/62**

(30) Priorität: **21.04.83 DE 3314398**

(43) Veröffentlichungstag der Anmeldung: **07.11.84**
**Patentblatt 84/45**

(84) Benannte Vertragsstaaten: **AT BE CH FR GB IT LI LU NL SE**

(71) Anmelder: **Kurt Wolf & Co. KG, Langwiesenweg 67/71, D-7547 Wildbad (DE)**

(72) Erfinder: **Andre, Wolfram, Dipl.-Ing., Eichenweg 7, D-7307 Aichwald 4 (DE)**

(74) Vertreter: **Vogel, Georg, Hermann-Essig-Strasse 35, D-7141 Schwieberdingen (DE)**

(54) **Vorrichtung zur Steuerung des Gar- bzw. Kochvorganges in einem Kochgefäss.**

(57) Die Erfindung betrifft eine Vorrichtung zur Steuerung des Gar- bzw. Kochvorganges in einem mittels eines Heizelementes mit Steuerschaltung aufheizbaren Kochgefäß, bei der die Temperatur im bzw. am Kochgefäß erfaßt und über die Steuerschaltung zur Regelung des Heizelementes ausgenützt wird und bei der die Gar- bzw. Kochzeit mittels eines einstellbaren Zeitgliedes vorgebbar ist. Die Gar- bzw. Kochzeit im Kochgefäß wird dadurch von der Trägheit des Gar- bzw. Kochsystems unabhängig, daß das Zeitglied erst mit dem Erreichen der Gar- bzw. Kochtemperatur mit der Abmessung der vorgegebenen Gar- bzw. Kochzeit beginnt und in Abhängigkeit von dem Anstieg der Temperatur-Zeit-Kennlinie in der Aufheizphase so beeinflußbar ist, daß das Zeitglied die Abschaltung des Heizelementes vorzeitig und um so früher einleitet, je langsamer der Anstieg der Temperatur-Zeit-Kennlinie in der Aufheizphase ist.

EP 0 123 970 A2

- 1 -     0123970

Vorrichtung zur Steuerung des Gar- bzw. Kochvorganges
in einem Kochgefäß


Die Erfindung betrifft eine Vorrichtung zur Steuerung des Gar- bzw.
Kochvorganges in einem mittels eines Heizelementes mit Steuerschaltung
aufheizbaren Kochgefäß, bei der die Temperatur im bzw. am Kochgefäß
erfaßt und über die Steuerschaltung zur Regelung des Heizelementes
ausgenützt wird und bei der die Gar- bzw. Kochzeit mittels eines einstellbaren Zeitgliedes vorgebbar ist.

Es sind Vorrichtungen dieser Art bekannt, bei denen das Zeitglied
elektrisch und mechanisch von der Steuerschaltung des Heizelementes
getrennt ist und manuell einstellbar ist. Nach Ablauf der vorgegebenen
Gar- bzw. Kochzeit wird von dem Zeitglied ein optisches und/oder akustisches Signal abgegeben, das das Ende der vorgegebenen Gar- bzw.
Kochzeit anzeigt. Die Steuerschaltung und das Heizelement werden dann
manuell abgeschaltet.

Bei diesen bekannten Vorrichtungen ist die Gar- und Kochzeit eine
vorgegebene Größe, die die Zeitkonstante des gesamten Gar- bzw. Kochsystems nicht berücksichtigt. Je nach Größe des Kochgefäßes, der Heizleistung des Heizelementes und dem Inhalt des Kochgefäßes weist das
gesamte Gar- bzw. Kochsystem in der Aufheizphase und in der Abkühlphase
unterschiedliche Aufheiz- und Abkühlzeiten auf, die sich in unterschiedlichen Steigungen der Temperatur-Zeit-Kennlinie des Gar- bzw. Kochsystems ausdrücken. Diese unterschiedlichen Aufheiz- und Abkühlzeiten des
Gar- bzw. Kochsystems werden aber bei den bekannten Vorrichtungen
dieser Art nicht berücksichtigt. Die über das Zeitglied vorgegebene
Gar- bzw. Kochzeit kann aber durch diese Eigenschaft des Gar- bzw.

Kochsystems so beeinflußt werden, daß sie zu kurz oder zu lang sein kann. In der Aufheizphase mit dem Anstieg der Temperatur-Zeit-Kennlinie läuft die Abmessung der Gar- bzw. Kochzeit schon vor dem Erreichen der Gar- bzw. Kochtemperatur, was zu einer Verkürzung der vorgegebenen Gar- bzw. Kochtemperatur führt. In der Abkühlphase bleibt nach der Abschaltung des Heizelementes das Gar- bzw. Kochsystem noch eine mehr oder weniger große Zeit auf der Gar- bzw. Kochtemperatur, so daß die Gar- bzw. Kochzeit verlängert wird.

Es ist Aufgabe der Erfindung, bei einer Vorrichtung der eingangs erwähnten Art bei der Vorgabe der Gar- bzw. Kochzeit automatisch die für den vorliegenden Gar- bzw. Kochvorgang auftretenden Trägheiten in der Aufheiz- und Abkühlphase so zu berücksichtigen, daß unabhängig von diesen Phasen die vorgegebene Gar- bzw. Kochzeit eingehalten wird.

Diese Aufgabe wird nach der Erfindung dadurch gelöst, daß das Zeitglied erst mit dem Erreichen der Gar- bzw. Kochtemperatur mit der Abmessung der vorgegebenen Gar- bzw. Kochzeit beginnt und in Abhängigkeit von dem Anstieg der Temperatur-Zeit-Kennlinie in der Aufheizphase so beeinflußbar ist, daß das Zeitglied die Abschaltung des Heizelementes vorzeitig und um so früher einleitet, je langsamer der Anstieg der Temperatur-Zeit-Kennlinie in der Aufheizphase ist.

Das Steuern des Zeitgliedes in Verbindung mit der vorliegenden Temperatur-Zeit-Kennlinie bringt eine automatische Anpassung der Gar- bzw. Kochzeit an das Gar- bzw. Kochsystem, so daß dieses in der Aufheizphase und Abkühlphase wohl die Vorgabe der Gar- bzw. Kochzeit im Zeitglied beeinflußt, aber die Abschaltung des Heizelementes so steuert, daß im Kochgefäß die vorgegebene Gar- bzw. Kochzeit unabhängig davon eingehalten wird. Da sich die Anpassung stets in Abhängigkeit von der beim betreffenden Gar- bzw. Kochvorgang vollzieht, ist das Gar- bzw. Kochsystem selbst ohne Einfluß auf die vorgegebene Gar- bzw. Kochzeit im Kochgefäß, es werden lediglich die Trägheiten des Gar- bzw. Kochsystems voll berücksichtigt, so daß dadurch keine unbeabsichtigte Kürzung bzw. Verlängerung des Gar- bzw. Kochvorganges mehr möglich ist.

Nach einer Ausgestaltung ist vorgesehen, daß die Temperatur im bzw. am Kochgefäß mittels eines Temperaturfühlers mit Signalgeber überwacht ist, daß der Signalgeber über eine Übertragungseinrichtung die Temperatur kennzeichnenden Signale an einen Signalempfänger überträgt und daß der Signalempfänger Steuersignale abgibt, die der Temperatur im bzw. am Kochgefäß proportional sind. DAbei kann die Übertragungseinrichtung auch drahtlos arbeiten, was insbesondere bei Kochgefäßen von Vorteil ist, die auf ein als Elektrokochplatte ausgebildetes Heizelement aufgestellt werden.

Die Überwachung der Temperatur-Zeit-Kennlinie auf das Erreichen der Gar- bzw. Kochtemperatur ist nach einer Ausgestaltung dadurch erreicht, daß die Steuersignale des Signalempfängers auf das Erreichen eines die Gar- bzw. Kochtemperatur kennzeichnenden Signals überwacht sind und daß mit dem Auftreten dieses Signals die Abmessung der vorgegebenen Gar- bzw. Kochzeit über das Zeitglied einleitbar ist.

Die automatische Erfassung der Aufheizphase und die automatische Anpassung der vorgegebenen Gar- bzw. Kochzeit im Zeitglied an die vorherrschenden Bedingungen des Gar- bzw. Kochsystems erfolgen dadurch, daß mittels einer Differenzierschaltung aus dem Steuersignal des Signalempfängers ein der Steigung der Temperatur-Zeit-Kennlinie proportionales Korrektursignal ableitbar ist und daß dieses Korrektursignal eine Verkürzung der vorgegebenen Gar- bzw. Kochzeit bewirkt, die umgekehrt proportional zur Steigung der Temperatur-Zeit-Kennlinie ist. Dadurch wird das Heizelement entsprechend vorzeitig abgeschaltet, wobei der Abschaltzeitpunkt so angepaßt ist, daß im Kochgefäß unter Ausnützung der Trägheit des Gar- bzw. Kochsystems in der Abkühlphase die vorgegebene Gar- bzw. Kochzeit eingehalten wird. Die Erfassung der Aufheizphase gibt ja einen Anhaltspunkt für die Trägheit des Gar- bzw. Kochsystems und kann zur entsprechenden vorzeitigen Abschaltung des Heizelementes ausgenützt werden.

Dabei ist nach einer Ausgestaltung vorgesehen, daß das der Steigung der Temperatur-Zeit-Kennlinie proportionale Korrektursignal in der Aufheizphase dem Zeitglied zuführbar ist und zu einer entsprechenden Verkürzung der im Zeitglied vorgegebenen Gar- bzw. Kochzeit führt. Die vorgegebene Gar- bzw. Kochzeit wird schon in der Aufheizphase entsprechend korrigiert, so daß mit dem Ende der so beeinflußten vorgegebenen Gar- bzw. Kochzeit stets das Heizelement abgeschaltet werden kann.

Die Erfindung wird anhand eines in den Zeichnungen dargestellten Ausführungsbeispiels näher erläutert. Es zeigt:

Fig. 1    die Temperatur-Zeit-Kennlinie $T=f(t)$ eines Gar- bzw. Kochsystems mit ersten Bedingungen,

Fig. 2    die Temperatur-Zeit-Kennlinie $T=f(t)$ desselben Gar- bzw. Kochsystems mit geänderten Bedingungen und

Fig. 3    ein Blockschaltbild für eine Vorrichtung nach der Erfindung zur Beeinflussung der Gar- bzw. Kochzeit.

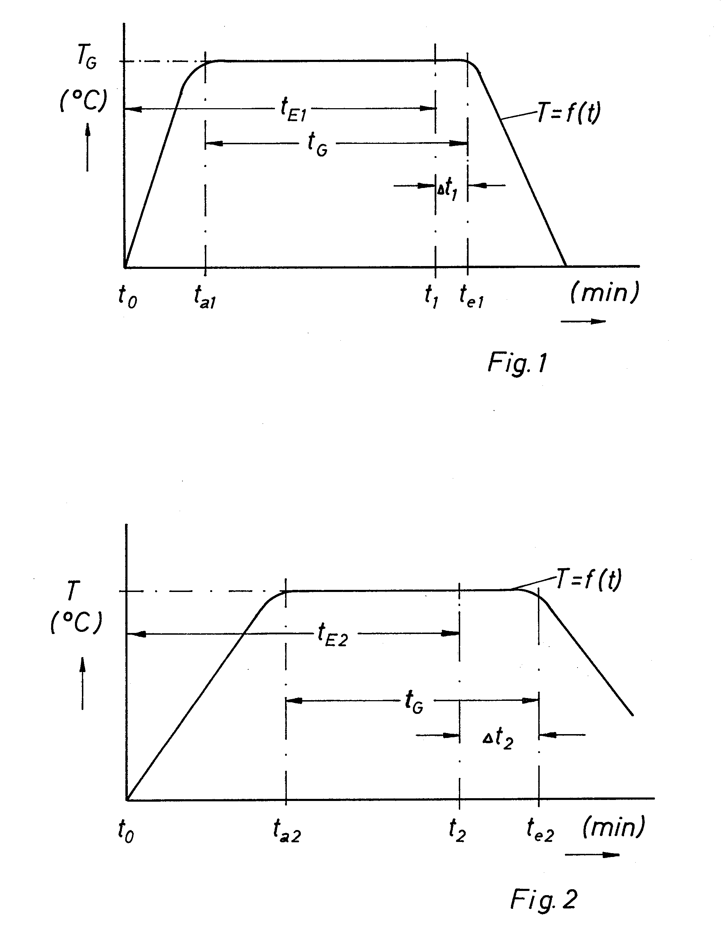

Die Temperatur-Zeit-Kennlinie $T=f(t)$ nach Fig. 1 hat in der Aufheizphase einen steilen Anstieg, da bereits nach der Zeit ta1 vom Einschaltzeitpunkt to aus die Gar- bzw. Kochtemperatur $T_G$ erreicht ist. Entsprechend steil ist auch der Abfall der Temperatur-Zeit-Kennlinie $T=f(t)$ in der Abkühlphase. Wird nach der Zeit t1 das Heizelement abgeschaltet, dann bleibt aufgrund der Trägheit des Gar- bzw. Kochsystems für die Zeitspanne $\Delta t1$ im Kochgefäß die Gar- bzw. Kochtemperatur $T_G$ aufrechterhalten. Wenn die Gar- bzw. Kochzeit $t_G$ im Zeitglied vorgegeben wird, dann kann der Abschaltzeitpunkt für das Heizelement um die Zeitspanne $\Delta t1$ vorverlegt werden, wenn der Beginn der Gar- bzw. Kochzeit $t_G$ vom Erreichen der Gar- bzw. Kochtemperatur $T_G$, d.h. vom Zeitpunkt ta1 aus, gemessen wird. Die Gar- bzw. Kochzeit $t_G$ im Kochgefäß wird also zwischen dem Zeitpunkt ta1 des Erreichens der Gar- bzw. Kochtemperatur $T_G$ in der Aufheizphase und dem Zeitpunkt te1 wirksam, in dem nach dem Abschalten des Heizelementes im Zeitpunkt t1 die Temperatur im Kochgefäß unter die Gar- bzw. Kochtemperatur $T_G$ absinkt. Mit $t_{E1}$ ist die gesamte Einschaltzeit des Heizelementes gekennzeichnet.

Wird in dem Gar- bzw. Kochsystem der Fig. 1 z.B. der im wesentlichen flüssige Inhalt im Kochgefäß wesentlich vergrößert, dann ergibt sich eine Temperatur-Zeit-Kennlinie T=f(t), wie sie in Fig. 2 gezeigt ist. Die Trägheit des Gar- bzw. Kochsystems ist größer, so daß erst nach der Zeit ta2 die Gar- bzw. Kochtemperatur TG im Kochgefäß erreicht ist. Der Anstieg der Temperatur- Zeit-Kennlinie T=f(t) in der Aufheizphase ist wesentlich flacher. Demzufolge erfolgt auch der Temperaturabfall in der Abkühlphase langsamer. Wird im Zeitpunkt t2 das Heizelement abgeschaltet, dann behält das Kochgefäß für die Zeitspanne t2 die Gar- bzw. Kochtemperatur $T_G$ bei. Die Zeitspanne t2 ist größer als die Zeitspanne t1 und kann so gewählt werden, daß auch bei dieser Temperatur-Zeit-Kennlinie T=f(t) die gleiche Gar- bzw. Kochzeit $T_G$ im Kochgefäß eingehalten wird.

Wie die beiden Temperatur-Zeit-Kennlinien der Fig. 1 und 2 zeigen, ist es wichtig, die Abmessung der Gar- bzw. Kochzeit $t_G$ erst beim Erreichen der Gar- bzw. Kochtemperatur $T_G$ zu beginnen, den Abschaltzeitpunkt t1 bzw. t2 des Heizelementes aber so zu beeinflussen, daß unter Ausnützung der Zeitspannen t1 und t2 die Gar- bzw. Kochzeit $t_G$ im Kochgefäß dem vorgegebenen Wert entspricht und von dem Verlauf der Temperatur-Zeit-Kennlinie T=f(t) in der Aufheiz- und Abkühlphase unabhängig wird. Es ist leicht erkennbar, daß dies dann automatisch erfolgt, wenn in der Aufheizphase ein Steuersignal abgeleitet wird, das um so größer ist, je flacher der Anstieg der Temperatur-Zeit-Kennlinie T=f(t) in der Aufheizphase ist. Dieses Steuersignal läßt sich also aus der Steigung der Temperatur-Zeit-Kennlinie T=f(t) ableiten.

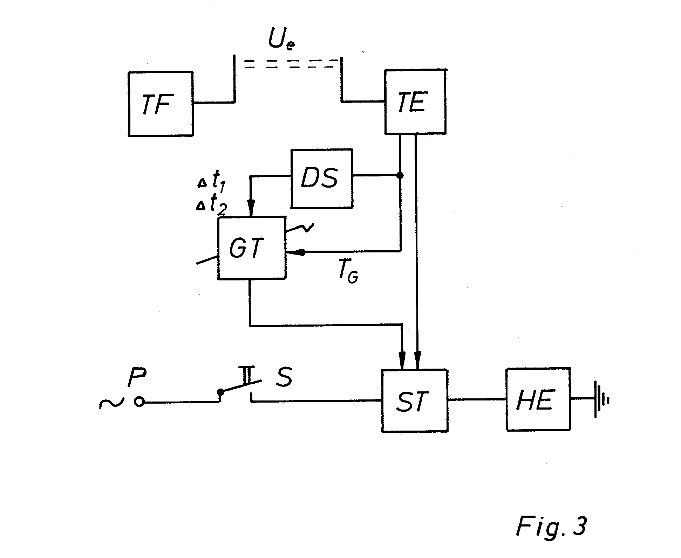

Wie diese Beeinflussung der vorgegebenen Garzeit im Zeitglied erfolgen kann, wird anhand des Blockschaltbildes nach Fig. 3 schematisch erläutert. Mit dem Schalter S wird der Versorgungsstromkreis für die Steuerschaltung ST des Heizelementes HE geschlossen. Das Heizelement HE heizt das Kochgefäß auf, in dem bzw. an dem mittels eines Temperaturfühlers mit Signalgeber TF die Temperatur erfaßt wird. Über die Übertragungseinrichtung Ue gibt der Signalgeber Signale an den Signalempfänger TE, die die im Kochgefäß herrschende Temperatur kennzeichnen. Der Signalempfänger TE kann ein Steuersignal abgeben, das der Temperatur-Zeit-Kennlinie $T=f(t)$ nach Fig. 1 oder Fig. 2 entspricht. Das Steuersignal des Signalempfängers TE wird direkt der Steuerschaltung ST zugeführt, die die Heizleistung des Heizelementes HE in bekannter Weise so regelt, daß nach der Aufheizphase die vorgegebene Gar- bzw. Kochtemperatur $T_G$ eingehalten wird.

Die im Kochgefäß gewünschte Gar- bzw. Kochzeit wird an dem einstellbaren Zeitglied GT vorgewählt. Der Signalgeber TE steuert mit seinem Steuersignal auch dieses Zeitglied GT an und zwar so, daß dieses mit der Abmessung der vorgegebenen Gar- bzw. Kochzeit erst dann beginnt, wenn das Steuersignal des Signalempfängers TE das Erreichen der Gar- bzw. Kochtemperatur $T_G$ anzeigt. In der Aufheizphase wird über die Differenzierschaltung DS ein Korrektursignal abgeleitet, das der Steigung der Temperatur-Zeit-Kennlinie $T=f(t)$ in der Aufheizphase direkt bzw. umgekehrt proportional ist. Dieses Korrektursignal wird dem Zeitglied GT vorzugsweise in der Aufheizphase zugeführt und zur automatischen Anpassung der abzumessenden Zeit ausgenützt. Je nach Größe des Korrektursignals, die von dem Anstieg der Temperatur-Zeit-Kennlinie $T=f(t)$ abhängt, wird eine Zeitspanne $\Delta t1$ oder $\Delta t2$ von der vorgegebenen Gar- bzw. Kochzeit $t_G$ im Zeitglied GT abgezogen. Nach Ablauf der so verkürzten, im Zeitglied GT vorgegebenen Zeit wird das Heizelement HE über die Steuerschaltung ST abgeschaltet. Die Zeitspannen $\Delta t1$ und $\Delta t2$ sind abhängig von der Trägheit des Gar- bzw. Kochsystems, wie sie sich in dem unterschiedlichen Verlauf der Temperatur-Zeit-Kennlinien $T=f(t)$

nach Fig. 1 und 2 ausdrückt. Da die Abschaltung des Heizelementes (HE um die Zeitspanne $\Delta t1$ bzw. $\Delta t2$ vorverlegt wird, erreicht man automatisch, daß die Gar- bzw. Kochzeit $t_G$ im Kochgefäß eingehalten wird und dies unabhängig davon, wie die Aufheiz- und Abkühlphasen des Gar- bzw. Kochsystems ablaufen.

Firma
Kurt Wolf & Co. KG
Langwiesenweg 67/71

7547  W i l d b a d

- 1 -

Ansprüche

1.  Vorrichtung zur Steuerung des Gar- bzw. Kochvorganges in einem
    mittels eines Heizelementes mit Steuerschaltung aufheizbaren
    Kochgefäß, bei der die Temperatur im bzw. am Kochgefäß erfaßt und
    über die Steuerschaltung zur Regelung des Heizelementes ausgenützt wird und bei der die Gar- bzw. Kochzeit mittels eines
    einstellbaren Zeitgliedes vorgebbar ist,
    dadurch gekennzeichnet,
    daß das Zeitglied (GT) erst mit dem Erreichen der Gar- bzw.
    Kochtemperatur ($T_G$) mit der Abmessung der vorgegebenen Gar- bzw.
    Kochzeit ($t_G$) beginnt und in Abhängigkeit von dem Anstieg der
    Temperatur-Zeit-Kennlinie $[T=f(t)]$ in der Aufheizphase so beeinflußbar ist, daß das Zeitglied (GT) die Abschaltung des Heizelementes (HE) vorzeitig und um so früher einleitet, je langsamer
    der Anstieg der Temperatur-Zeit-Kennlinie $[T=f(t)]$ in der Aufheiz-
    phase ist.

2.  Vorrichtung nach Anspruch 1,
    dadurch gekennzeichnet,
    daß die Temperatur im bzw. am Kochgefäß mittels eines Temperaturfühlers mit Signalgeber (TF) überwacht ist,
    daß der Signalgeber über eine Übertragungseinrichtung (Ue) die
    Temperatur kennzeichnenden Signale an einen Signalempfänger (TE)
    überträgt und

daß der Signalempfänger (TE) Steuersignale abgibt, die der Temperatur im bzw. am Kochgefäß proportional sind.

3. Vorrichtung nach Anspruch 2,
dadurch gekennzeichnet,
daß die Steuersignale des Signalempfängers (TE) auf das Erreichen eines die Gar- bzw. Kochtemperatur kennzeichnenden Signals überwacht sind und
daß mit dem Auftreten dieses Signals die Abmessung der vorgegebenen Gar- bzw. Kochzeit über das Zeitglied (GT) einleitbar ist.

4. Vorrichtung nach einem der Ansprüche 1 bis 3,
dadurch gekennzeichnet,
daß mittels einer Differenzierschaltung (DS) aus dem Steuersignal des Signalempfängers (TE) ein der Steigung der Temperatur-Zeit-Kennlinie $[T=f(t)]$ proportionales Korrektursignal ableitbar ist und daß dieses Korrektursignal eine Verkürzung ($\Delta t1$, $\Delta t2$) der vorgegebenen Gar- bzw. Kochzeit ($t_G$) bewirkt, die umgekehrt proportional zur Steigung der Temperatur-Zeit-Kennlinie $[T=f(t)]$ ist.

5. Vorrichtung nach einem der Ansprüche 1 bis 4,
dadurch gekennzeichnet,
daß das der Steigung der Temperatur-Zeit-Kennlinie $[T=f(t)]$ proportionale Korrektursignal in der Aufheizphase dem Zeitglied (GT) zuführbar ist und zu einer entsprechenden Verkürzung der im Zeitglied (GT) vorgegebenen Gar- bzw. Kochzeit führt.

Fig. 1

Fig. 2

Fig. 3